Europäisches Patentamt

**European Patent Office**

**Office européen des brevets**

(11) Publication number: **0 136 361**

**A1**

(12) **EUROPEAN PATENT APPLICATION**

published in accordance with Art. 158(3) EPC

(21) Application number: **84901005.3**

(22) Date of filing: **01.03.84**

Data of the international application taken as a basis:

(86) International application number:
**PCT/JP84/00075**

(87) International publication number:
**WO84/03476 (13.09.84 84/22)**

(51) Int. Cl.⁴: **B 60 B 35/10**

(30) Priority: **01.03.83 JP 28092/83 U**

(43) Date of publication of application:
**10.04.85 Bulletin 85/15**

(84) Designated Contracting States:
**DE FR GB NL**

(71) Applicant: **FUKUZAWA TRACTOR KABUSHIKI KAISHA**
**7-2, Nishi 8-Jyo Memuromachi**
**Kasai-Gun Hokkaido 082(JP)**

(72) Inventor: **FUKUZAWA, Kazuhiko Fukuzawa Tractor K. K.**
**7-2 Nishi 8-Jyo Memuromachi**
**Kasai-Gun Hokkaido 082(JP)**

(74) Representative: **Dr. Elisabeth Jung Dr. Jürgen**
**Schirdewahn Dipl.-Ing. Claus Gernhardt**
**P.O. Box 40 14 68 Clemensstrasse 30**
**D-8000 München 40(DE)**

(54) **APPARATUS FOR VARYING TRACK WIDTH OF AGRICULTURAL TRACTOR.**

(57) A drum-shaped hub (10) is attached to an end of an axle A of a tractor, and an outer ring (17) which retains a tire is screwed onto a drum portion of the hub. The outer ring (17) is located at a predetermined position on the hub drum portion and is then secured by fixing devices (10a, 15, 19). If the axle A of the tractor is rotated under the state in which the fixing devices are removed and the outer ring (17) is screwed onto the hub drum portion, the position of the outer ring (17) along the hub drum portion changes, thereby enabling an easy adjustment of the track width.

FIG. 1

DESCRIPTION

FARM TRACTOR TREAD ADJUSTMENT DEVICE

## FIELD OF THE INVENTION

The present invention relates to a farm tractor and more particularly to a farm tractor tread (the distance between the two front wheels or two rear wheels of a tractor) adjustment device which can quickly vary or adjust the tread depending upon a furrow width in a very simple manner.

## BACKGROUND OF THE INVENTION

When a field work is carried out by farm tractors, the tread of a farm tractor must be varied or adjusted depending upon a furrow width. According to a conventional tread adjustment method, first, an agriculture equipment is disconnected from a farm tractor and then the rear portion of the farm tractor is lifted by means of a jack. Thereafter eight rear hub bolts must be removed so that a wheel disk which interconnects between an axle and a wheel is removed from a hub portion of the axle. Next, rim bolts (in general, eight bolts) are removed so as to disassemble an annular rim carrying a tire and a wheel disk which supports the rim.

After the wheel disk, the rim and the axle have been disassembled separately, the point at which the wheel disk and the rim are interconnected is varied (joint means are provided for the rim at various points in the axial direction so that the point of joint between the wheel disk and rim may be varied) and then the wheel disk and the rim are assembled again. Thereafter, the wheel disk is securely joined to the axle and then the jack is removed and a desired agricultural equipment is attached to the farm tractor. In some cases, the right and left tires are exchanged with each other.

Such tread adjustment method as described above takes a long period of time and is cumbersome and extremely inefficient.

In view of the above defects, it is an object of this invention to provide a farm tractor tread adjustment device which can quickly and safely vary or adjust the tread in a very simple manner by eliminating the above-described cumbersome tread adjustment.

### DISCLOSURE OF THE INVENTION

According to the present invention, a drum-shaped hub is mounted at the end of an axle and the barrel or cylindrical portion of the hub is formed with male screw-threads which are engaged with female screw-threads formed on the inner surface of the boss portion of an outer ring carrying a tire so that the outer ring can be securely held at a predetermined position on the barrel or cylindrical portion of the hub by holding means.

Therefore when the axle is rotated while the outer ring remains in the screw-engagement with the barrel or cylindrical portion of the hub with holding means removed, the outer ring can be shifted in the axial direction of the hub. As a result, the tread adjustment can be accomplished in an extremely simple manner.

According to a further aspect of the present invention, a flange is formed at the inner end of the barrel or cylindrical portion of the hub and a stopper plate is detachably attached to the outer end of the barrel or cylindrical portion of the hub. After the outer ring has been shifted to a desired position, an annular spacer ring is interposed between the outer ring and the flange at the inner end of the hub or between the outer ring and the stop plate. Alternatively, spacer rings are interposed between the outer ring and the flange at the inner end of the hub and between the outer ring and the stop plate. Thus, the outer ring can be brought to a desired position and securely held in that position in a very simple manner.

BRIEF DESCRIPTION OF THE DRAWINGS

Fig. 1 is a longitudinal sectional view of a farm tractor tread adjustment device in accordance with the present invention;

Fig. 2 is a longitudinal sectional view of the farm tractor tread adjustment device when the tread is set in a minimum width;

Fig. 3 is a longitudinal sectional view of the farm tractor tread adjustment device when the tread is set in an intermediate width; and

Fig. 4 is a longitudinal sectional view of the farm tractor tread adjustment device when the tread is set in a maximum width.

THE BEST MODE FOR CARRYING OUT THE INVENTION

The present invention is now described in detail with reference to the accompanying drawings.

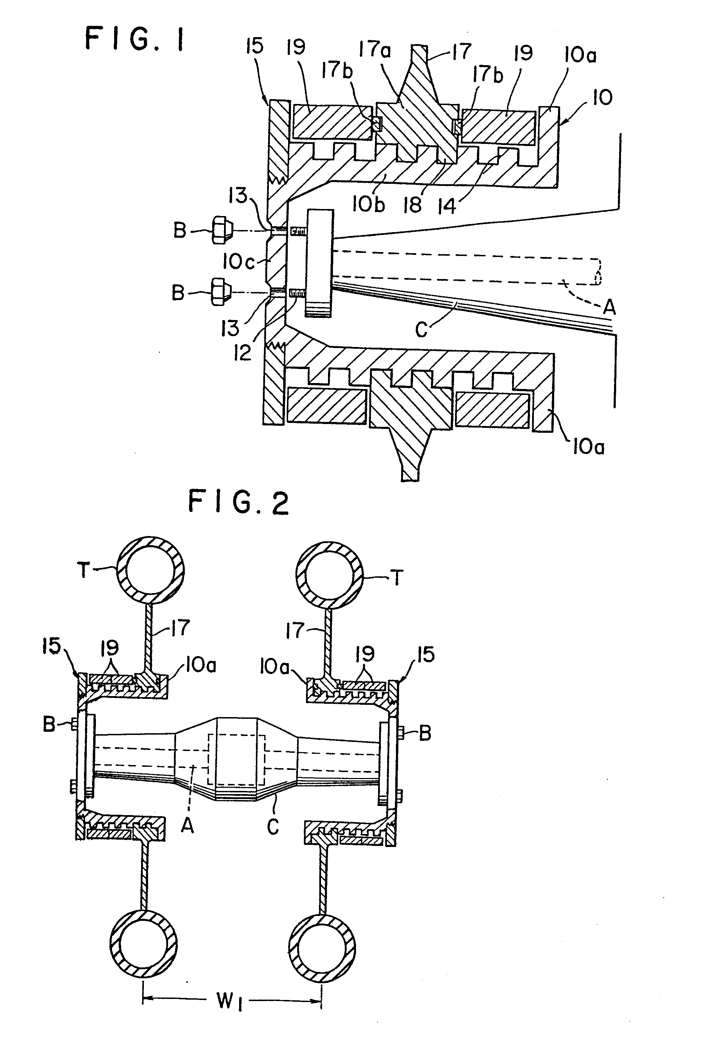

In Fig. 1, reference numeral 10 designates a specially fabricated drum type hub which has a flange 10a at its inner end and an end plate 10c at its outer end. The end plate 10c is formed with holes 13 through which are extended hub bolts 12 which in turn are extended outwardly from the outer end of an axle A extending through a casing C. When the hub bolts 12 are inserted into the holes 13 and bolts B are screw-engaged with the hub bolts 12, the hub 10 can be securely joined to the axle A. The cylindrical barrel portion 10b of the hub 10 is formed with male screw-threads 14 of a relatively large pitch and a ring-shaped or annular stop plate 15 is detachably attached by screw-threads to the outer end portion of the barrel portion 10b of the hub 10 in an opposed relationship with the inner flange 10a. The stop plate 15 may be so designed and constructed that it may securely be joined to the outer end of the barrel portion 10b of the hub 10 with bolts. An outer ring 17, which corresponds to a conventional wheel disk, is screw-engaged with the barrel portion 10b of the hub 10 and the inner surface of the boss portion 17a of the outer ring 17 is formed with female screw-threads 18 engageable with the male screw-threads 14 of the barrel portion 10b of the hub 10.

The outer ring 17 must be engaged with the barrel portion 10b of the hub 10 and then securely held at a predetermined portion. Ring-shaped or annular spacer rings 19 engageable with the barrel portion 10b of the hub 10 are used as one means for securely holding the outer ring 17 in position. Depending on the position at which the outer ring 17 is securely held, the widths of the spacer rings 19 are selected. And the spacer rings 17 are selectively disposed between the flange 10a of the hub 10 and the outer ring 17 and/or between the outer ring 17 and the stop plate 15 so that the position of the outer ring 17 is determined. The spacer rings 19 are made of, for instance, cast iron. Buffer plates 17b are disposed at suitable positions of the side surfaces of the boss portion 17a of the outer ring 17 so that the side surfaces of the spacer rings 19 and the boss portion 17a can be prevented from being pressed too strongly against each other. Consequently, the spacer rings 17 can be displaced in the peripheral directions of the side surfaces of the boss portion 17a of the outer ring 17.

In order to set the outer ring 17 at the intermediate position of the barrel portion 10b of each hub 10 as shown in Fig. 1, first, the stopper plate 15 is rotated and removed from the outer end of the barrel portion 10b of the hub 10 and then the inner spacer ring 19 is inserted until it abuts against the flange 10a of the hub 10. Thereafter the outer ring 17 is screw-engaged with the male threads 14 of the barrel portion 10b of the hub 10. When the axle A is rotated in the clockwise or counterclockwise direction while a tire T (see Fig. 2) carried by the outer ring 17 remains in contact with the ground after the outer ring 17 has been screw-engaged with the barrel portion 10b of the hub 10, the hub 10 is caused to rotate so that the outer ring 17 is caused to shift toward the right or left. In the case of the tractor, the brakes can be applied to the right and left wheels independently of each other, when the wheel which is not adjusted is braked and then the axle A is rotated, the outer ring 17 can shift while the tractor is held stationary. Thus, the position of the outer ring 17 can be arbitrarily selected.

When the barrel portions 10b of the right and left hubs 10 are threaded in the opposite directions to each other and the right and left outer rings 17 are threaded also in the opposite directions to each other, the right and left tires T (that is, the right and left outer rings 17) can be moved toward or away from each other when the tractor is advanced forwardly or rearwardly so that the positions of the right and left outer rings 17 can be simultaneously adjusted. More particularly, when the axle A is rotated while both the right and left tires T are kept in contact with the ground, the male and female screw-threads 14 and 18 slide each other to move the right and left outer rings 17 toward or away from each other.

After the outer ring 17 has been set at the intermediate position in the manner described above, the outer spacer ring 17 is fitted on the barrel portion 10b of the hub 10 outwardly of the outer ring 17 and thereafter the stop plate 15 is screw-engaged with the outer end portion of the barrel portion 10b of the hub 10. The outer ring 17 can be securely held in position on the hub 10 by attaching the stop plate 15.

In this case, as the buffer plates 17b are provided on the side surfaces of the boss portion 17a of the outer ring 17, the side surfaces of the spacer rings 19 can be easily separated from the side surfaces of the boss portion 17a of the outer ring 17. Therefore, the operation for separating the spacer rings 19 from the outer ring 17 is much faciliated. Especially because the buffer plates 17b are movable in the peripheral directions along the side surfaces of the outer ring 17, the separation between the spacer rings 17 and the outer ring 17 can be much facilitated.

Figs. 2 to 4 show three tread adjustment cases, respectively. Fig. 2 shows a case wherein the tread is set in the narrowest width ($W_1$). In this case, each outer ring 17 contacts the inner flange 10a of the hub 10 and two space rings 19 are interposed in series between the outer ring 17 and the stop plate 15.

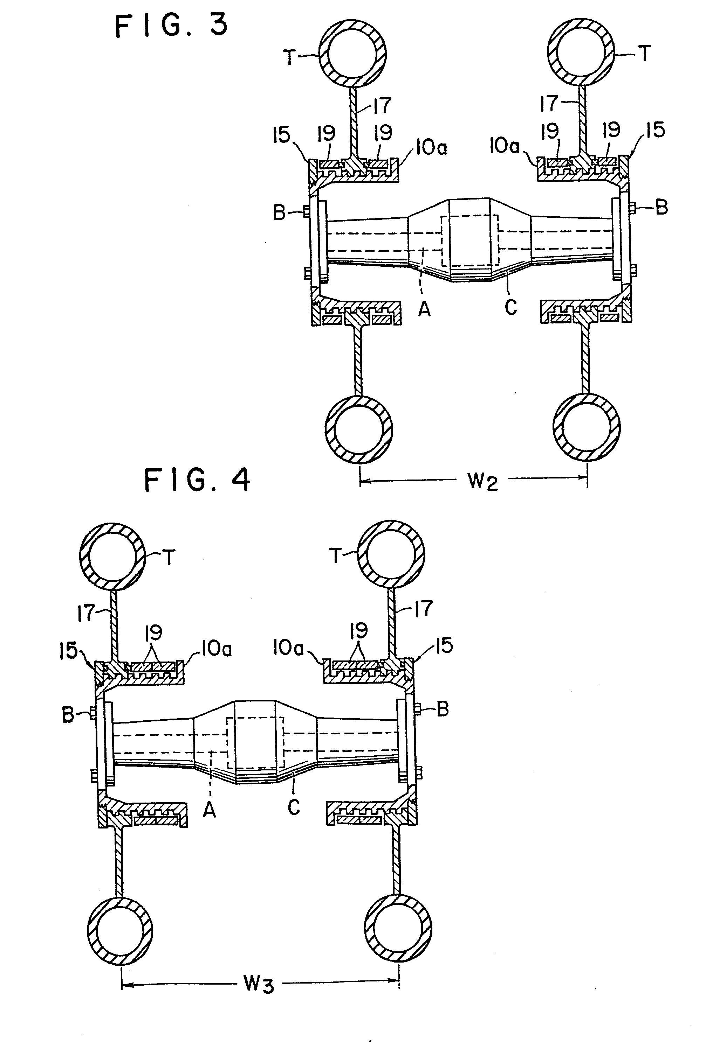

Fig. 3 shows a case wherein the tread is set in the intermediate width ($W_2$) as in the case of Fig. 1. As described above, the right and left spacer rings 19 are disposed inwardly and outwardly of the outer ring 17, respectively.

Fig. 4 shows a case wherein the tread is set in the widest width ($W_3$). In this case, each outer ring 17 contacts the stop plate 15 and two spacer rings 19 are interposed in series between the outer ring 17 and the inner flange 10a of the hub 10.

As described above, when the axle of the tractor axle is roated in the clockwise or counterclockwise direction while the tires T carried by the outer rings 17 contact the ground, the tread can be adjusted depending upon a furrow width. As a result, as compared with the conventional tread adjustment methods, the tread adjustment time can be reduced to about 1/20.

Furthermore, unlike the conventional tread adjustment methods, it is not needed to use a jack. In addition, safety can be ensured and accident can be avoided because only a few parts are removed.

For instance, in some region, furrow widths are determined as 60 cm, 66 cm and 72 cm. In this case, when the tread can be varied in three widths as described above with reference to Figs. 2 to 4, an operator can easily and safely adjust the tractor tread depending upon the selected furrow. Moreover, the spacer rings 19 are selectively disposed in series or spaced apart from each other if the widths of spacer rings are suitably selected. If only two spacer rings 19 are provided with respect to one hub 10, it is not necessary to use a spacer ring with a wider width even when the outer ring 17 is set in contact with the inner flange 10a of the hub or with the stop plate 15.

## INDUSTRIAL APPLICABILITY

As described above, the farm tractor tread adjustment device in accordance with the present invention is useful in various farm lands with different furrow widths. Especially when the area of a farm land is limited, the farm tractor tread adjustment device in accordance with the present invention is most advantageously adapted because the tread can be easily and quickly varied depending upon a furrow width.

WHAT IS CLAIMED IS:

1.      A farm tractor tread adjustment device of
the type in which the tread is varied depending upon
a furrow width by changing the position of a wheel
with respect to an axle, characterized in that a
drum-shaped hub (10) is mounted at one end of the
axle; male screw-threads (14) are formed on the
outer surface of the barrel or cylindrical portion of
the hub (10); an outer ring (17) which carries a tire
is screw-engaged with the male screw-threads on the
outer surface of the barrel or cylindrical portion
of the hub (10); female screw-threads (18) are formed
on the inner surface of the boss portion (17a) of the
outer ring (17) and screw-engaged with the male
screw-threads (14) on the outer surface of the barrel
or cylindrical portion of the hub (10); and the outer
ring 17 is securely held at a predetermined position
on the outer surface of said hub by holding means
(10a, 15, 19).

2.      A farm tractor tread adjustment device as set
forth in Claim 1, wherein the outer surfaces of the
drum-shaped hubs mounted at both ends of the axle are
formed with male screw-threads in the opposite direction to each other and the directions of the female
screw-threads (18) on the inner surfaces of the boss
portions (17a) of two outer rings (17) are determined
according to those of the male screw-threads, respectively.

3.      A farm tractor tread adjustment device as set
forth in Claim 1 or 2, wherein the holding means
comprises a flange (10a) formed at the inner end of
each drum-shaped hub (10), a stopper plate (15)
detachably screw-engaged with the outer end of the
hub (10), and an annular spacer ring (19) fitted on
the barrel or cylindrical portion of the hub (10) so as to close at least one space between the boss portion (17a) of the outer ring (17) and the flange (10a) of the hub (10) and between the boss portion (17a) and the stopper plate (15).

4.      A farm tractor tread adjustment device as set forth in any one of Claim 1 to claim 3, wherein buffer members (17b) are provided at the side surfaces, respectively, of the boss portion (17a) of each outer ring (17) and contact the side end(s) of the spacer ring(s).

FIG. 1

FIG. 2

FIG. 3

FIG. 4

# INTERNATIONAL SEARCH REPORT

**0136361**

International Application No. PCT/JP84/00075

## I. CLASSIFICATION OF SUBJECT MATTER (if several classification symbols apply, indicate all) ³

According to International Patent Classification (IPC) or to both National Classification and IPC

Int. Cl³    B60B35/10

## II. FIELDS SEARCHED

### Minimum Documentation Searched ⁴

| Classification System | Classification Symbols |
|---|---|
| IPC | B60B35/10 |

| | Documentation Searched other than Minimum Documentation to the Extent that such Documents are Included in the Fields Searched ⁵ |
|---|---|
| | Jitsuyo Shinan Koho                 1938 – 1983<br>Kokai Jitsuyo Shinan Koho       1971 – 1983 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| X | JP, Y1, 39-23716 (Noda Sangyo Kabushiki Kaisha), 17 August 1964 (17. 08. 64) | 1 |
| Y | JP, Y1, 39-23716 (Noda Sangyo Kabushiki Kaisha), 17 August 1964 (17. 08. 64) | 2, 3, 4 |
| Y | JP, Y1, 43-17608 (Noda Sangyo Kabushiki Kaisha), 22 July 1968 (22. 07. 68), Column 2, lines 3 to 4 | 2, 3, 4 |
| Y | JP, Y1, 41-2495 (Daikin Kogyo Co., Ltd.), 17 February 1966 (17. 02. 66) | 2, 3, 4 |
| Y | JP, Y2, 54-11618 (Bridgestone Tire Co., Ltd.), 24 May 1979 (24. 05. 79), Column 4, lines 26 to 32 | 2, 3, 4 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| May 25, 1984   (25. 05. 84) | June 4, 1984    (04. 06. 84) |

| International Searching Authority ¹ | Signature of Authorized Officer ³⁰ |
|---|---|
| Japanese Patent Office | |

Form PCT/ISA/210 (second sheet) (October 1981)